# EUROPEAN PATENT APPLICATION

(11) **EP 4 657 617 A2**
(43) Date of publication of application: **03.12.2025**
(21) Application number: 25179314.7
(22) Date of filing: 28.05.2025
(51) Int. Cl.: H01M 50/107, H01M 50/152, H01M 50/184, H01M 50/186

(54) **SECONDARY BATTERY**

(30) Priority: 29.05.2024 KR 20240070125
(71) Applicant: SK On Co., Ltd., Seoul 03161 (KR)
(72) Inventor: KWAK, Seung Ho, Daejeon 34124 (KR)
(74) Representative: Prüfer & Partner mbB Patentanwälte · Rechtsanwälte

(57) **Abstract**

A secondary battery according to various embodiments of the present disclosure includes a battery can configured to accommodate an electrode assembly through an open end; a cap plate coupled to the open end; and a sealing gasket interposed between the battery can and the cap plate, wherein the cap plate includes a flat part and a raised part protruding from the flat part toward at least one axial direction of the battery can.

## Description

### [BACKGROUND OF THE INVENTION]

### 1. Field of the Invention

The present disclosure relates to a secondary battery.

### 2. Description of the Related Art

Secondary batteries are used as energy sources in electric vehicles or electronic devices. In the secondary battery, a jelly-roll-type electrode assembly, in which an anode plate, a cathode plate and a separator are wound together, is used, or alternatively, an electrode assembly fabricated by stacking an anode plate, a cathode plate, and a separator in an appropriate order may be used.

This electrode assembly is accommodated in a housing and connected to an anode terminal and a cathode terminal. The housing is then sealed after being filled with an electrolyte.

### [SUMMARY OF THE INVENTION]

According to an aspect of the present disclosure, there may be provided a secondary battery capable of improving sealing performance.

In addition, according to another aspect of the present disclosure, there may be provided a secondary battery capable of improving the efficiency of a manufacturing process.

A secondary battery according to various embodiments of the present disclosure may include: a battery can configured to accommodate an electrode assembly through an open end; a cap plate coupled to the open end; and a sealing gasket interposed between the battery can and the cap plate, wherein the cap plate may include a flat part and a raised part protruding from the flat part toward at least one axial direction of the battery can.

In exemplary embodiments, the cap plate may include a flat part formed perpendicular to the axial direction, and the raised part may be formed to extend in a radially outward direction from the flat part.

In exemplary embodiments, the raised part may protrude upward in the axial direction from the cap plate.

In exemplary embodiments, the raised part may protrude downward in the axial direction from the cap plate.

In exemplary embodiments, the raised part may protrude upward and downward in the axial direction from the cap plate, respectively.

In exemplary embodiments, the raised part may include a first inclined surface formed to incline at a first angle from the flat part.

In exemplary embodiments, the first angle may be formed greater than 90 degrees and less than 180 degrees.

In exemplary embodiments, the first angle may be formed in a range of 130 degrees or more and less than 180 degrees.

In exemplary embodiments, the raised part may include a flat surface that extends perpendicular to the axial direction from the first inclined surface.

In exemplary embodiments, the raised part may include a curved portion which is formed to curve downward as it extends radially outward from the first inclined surface.

In exemplary embodiments, the sealing gasket may include a flat region that faces the flat part of the cap plate and a pressed region that faces the raised part, wherein a thickness of the pressed region may be smaller than that of the flat region.

In exemplary embodiments, the sealing gasket may include a first sealing part in contact with at least a portion of an upper surface of a peripheral part of the cap plate, a second sealing part in contact with a side surface of the peripheral part, and a third sealing part in contact with at least a portion of a lower surface of the peripheral part, wherein the flat region and the pressed region may be formed in at least one of the first sealing part and the third sealing part.

In exemplary embodiments, a thickness of the pressed region may be formed in a range of 30% or more and less than 100% of a thickness of the flat region.

In exemplary embodiments, the raised part may be disposed at the peripheral edge of the cap plate.

In exemplary embodiments, a side protrusion protruding in the radially outward direction may be disposed on a side surface of the cap plate.

In exemplary embodiments, the side protrusion may press the sealing gasket toward a side wall of the battery can.

In exemplary embodiments, the side protrusion may be formed integrally with the raised part.

In exemplary embodiments, the raised part may be formed by bending at least a partial section of an end portion of the flat part toward at least one axial direction.

In exemplary embodiments, the raised part may be formed to protrude toward any one axial direction while being spaced inward from the peripheral edge of the flat part.

According to various embodiments of the present disclosure, the secondary battery may achieve excellent sealing performance while omitting a separate adhesive material.

According to various embodiments of the present disclosure, the adhesive material may be omitted from the sealing gasket, thereby reducing manufacturing costs.

According to various embodiments of the present disclosure, the process of applying the adhesive material to the sealing gasket may be omitted, thereby improving the efficiency of the manufacturing process.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a cross-sectional view schematically illustrating a cylindrical secondary battery according to an exemplary embodiment of the present disclosure;
FIG. 2 is a perspective view illustrating a cap plate according to an exemplary embodiment of the present disclosure;
FIG. 3 is a side view illustrating the cap plate according to an exemplary embodiment of the present disclosure;
FIG. 4 is an enlarged view of part A in FIG. 1 according to an exemplary embodiment of the present disclosure;
FIG. 5 is an enlarged view of part A in FIG. 1 according to an exemplary embodiment of the present disclosure;
FIG. 6 is an enlarged view of part A in FIG. 1 according to an exemplary embodiment of the present disclosure;
FIG. 7 is an enlarged view of part A in FIG. 1 according to an exemplary embodiment of the present disclosure;
FIG. 8 is an enlarged view of part A in FIG. 1 according to an exemplary embodiment of the present disclosure;
FIG. 9 is an enlarged view of part A in FIG. 1 according to an exemplary embodiment of the present disclosure; and
FIG. 10 is an enlarged view of part A in FIG. 1 according to an exemplary embodiment of the present disclosure.

### [DETAILED DESCRIPTION OF THE INVENTION]

The embodiments of the present disclosure are provided to more fully describe the present disclosure to those skilled in the art to which the present invention pertains. The following embodiments may be modified in various forms, and the scope of the present disclosure is not limited to these embodiments.

Hereinafter, some embodiments of the present disclosure will be described through exemplary drawings for the convenience of description. When assigning reference numerals to components of respective drawings, it should be noted that the same components will be denoted by the same reference numerals, even if they appear in different drawings.

The terms or words used in this specification and the claims should not be construed as being limited to their conventional or lexical meanings, and instead, in accordance with the principle that an inventor may define the concepts of terms or words in the most appropriate manner to describe his or her invention, they should be interpreted based on the meanings and concepts that meet the technical ideas of the present disclosure.

The terms used herein are provided to describe specific embodiments and are not intended to limit the present disclosure. As used herein, the singular form may include the plural form unless the context clearly dictates otherwise.

In addition, when used to describe and define the present disclosure, terms such as "comprise," "include," "consist of," and "have" should be interpreted in a non-exclusive manner. Unless explicitly stated otherwise, these terms should be construed to imply that the presence of the corresponding component, and thus should not be interpreted to exclude the presence of other components but rather to include them.

In addition, in describing components of the embodiment of the present disclosure, the terms such as first, second, A, B, (a), (b), and the like may be used. These terms are used to distinguish the component from other components and do not impose any limitations on their nature, sequence or order, etc.

It will be understood that when a component is described as being "connected" or "coupled" to another component, the component may be directly connected or coupled to the other component, but it may be "connected" or "coupled" to the other component with another component possibly interposed.

Space-related terms such as "beneath," "below," "lower," "above," and "upper" may be used to facilitate understanding of the relationship between an element or feature and another element or feature illustrated in the drawings. These space-related terms are provided to facilitate understanding of the present disclosure in their various process or usage states and are not intended to impose any limitations on the present disclosure. For example, if an element or feature in the drawing is turned upside down, the element or feature described as "beneath" or "below" becomes "above" or "upper." Accordingly, the term "beneath" is a relative concept that may encompass "upper" or "below" depending on orientation.

Hereinafter, a cylindrical secondary battery 10 according to various embodiments of the present disclosure will be described in detail with reference to the accompanying drawings.

The secondary battery 10 described in the present disclosure may be any type of conventional battery cell capable of converting the chemical energy of materials stored in the battery into electrical energy, and capable of supporting multiple charge/discharge cycles.

In describing various embodiments of the present disclosure, the axial direction may refer to the direction in which a central axis extends, along which a jelly-roll-shaped electrode assembly 100 is wound, and the radial direction may refer to a direction extending toward or away from the central axis.

For example, the axial direction may be parallel to the direction from an electrode terminal 700 toward a cap plate 200. For example, the radial direction may be parallel to the direction from an axis of the cylindrical secondary battery 10 toward a side wall 420.

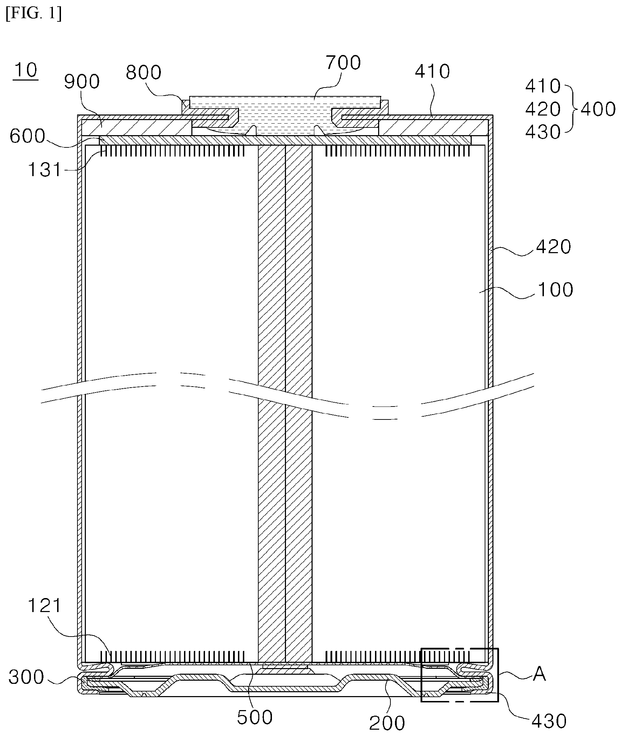

FIG. 1 is a cross-sectional view schematically illustrating the cylindrical secondary battery 10 according to an exemplary embodiment of the present disclosure.

Referring to FIG. 1, the secondary battery 10 according to an exemplary embodiment of the present disclosure may include an electrode assembly 100, a battery can 400, a first current collector plate 500, the electrode terminal 700, a terminal gasket 800, an insulator 900, a second current collector plate 600, the cap plate 200, and a second sealing gasket 300.

The electrode assembly 100 may include a first electrode plate (not shown), a second electrode plate (not shown), and a separator (not shown).

The first electrode plate may be either a cathode plate or an anode plate. For example, the first electrode plate may be an anode plate. In an exemplary embodiment, the first electrode plate may include an anode current collector in the form of a metal foil and an anode coating layer formed by applying an anode active material to the anode current collector. For example, the anode current collector may include copper or nickel.

In an exemplary embodiment, the anode coating layer may be an electrically conductive coating, and may include an anode active material. For example, the anode active material may include a silicon material (e.g., metallic silicon and silicon dioxide), a carbon-based material (e.g., graphite materials, graphene-containing materials, hard carbon, soft carbon, carbon nanotubes, porous carbon, or conductive carbon), a tin-based material, or a metal oxide, but it is not limited thereto, and any anode active material known to those skilled in the art may be used.

In an exemplary embodiment, the first electrode plate may include a first electrode coated part on which an anode coating layer is formed on the anode current collector and a first electrode uncoated part 121, in which no anode coating layer is formed.

The second electrode plate may be either a cathode plate or an anode plate. When the second electrode plate is a cathode plate, the first electrode plate may be an anode plate, and when the second electrode plate is an anode plate, the first electrode plate may be a cathode plate.

For example, the second electrode plate may be a cathode plate. In an exemplary embodiment, the second electrode plate may include a cathode current collector in the form of a metal foil and a cathode coating layer formed by applying a cathode active material to the cathode current collector. For example, the cathode current collector may include aluminum.

In an exemplary embodiment, the cathode coating layer may be an electrically conductive coating, and may include a cathode active material. For example, the cathode active material may include lithium nickel manganese cobalt oxide (NMC), lithium manganese oxide (LMO), lithium iron phosphate (LFP), lithium cobalt oxide (LCO), lithium titanate (LTO), or a chalcogenide compound (such as LiTiS₂), but it is not limited thereto, and any cathode active material known to those skilled in the art may be used.

In an exemplary embodiment, the second electrode plate may include a second electrode coated part on which a cathode coating layer is formed on the cathode current collector and a second electrode uncoated part 131, in which no cathode active material is formed on the cathode current collector.

The separator may be interposed between the first electrode plate and the second electrode plate to prevent the first electrode plate and the second electrode plate from being electrically connected to each other and causing a short circuit. In an exemplary embodiment, the separator may include an electrically insulating material. For example, the separator may include a polymeric material. For example, the separator may include polyethylene, polypropylene, or a combination thereof, but it is not limited thereto.

The electrode assembly 100 may be wound in a jelly-roll shape by stacking the above-described first electrode plate, the separator, and the second electrode plate. In an exemplary embodiment, the first electrode uncoated part 121 and the second electrode uncoated part 131 may be exposed at opposite axial ends of the electrode assembly 100 to define electrode tabs.

The battery can 400 may have an open end formed at least one axial end thereof so that the electrode assembly 100 can be accommodated through the open end. For example, the open end may be formed by opening an upper axial end of the battery can 400. Alternatively, the open end may be formed by opening a lower axial end of the battery can 400, or by opening both the upper and lower ends of the battery can. Here, as an example, the lower end of the battery can 400 is described as being open as shown in FIG. 1, but it is obvious that the opposite configuration may also be employed.

The battery can 400 may include a conductive metal material. The battery can 400 may be electrically connected to either the first electrode plate or the second electrode plate.

In an exemplary embodiment, the battery can 400 may be cylindrical. In this case, a direction parallel to the central axis of the battery can 400 or the electrode assembly 100 may be described as the axial direction, and a direction perpendicular to the central axis of the battery can 400 or the electrode assembly 100 may be described as the radial direction.

The battery can 400 may include the open end formed at the lower axial end, an upper wall 410 formed at an axial end opposite to the open end, and the side wall 420 connecting the open end and the upper wall 410. In an exemplary embodiment, a terminal hole, through which an electrode terminal 700 passes, may be formed in the upper wall 410 of the battery can 400.

The electrode terminal 700 may be disposed to pass through the terminal hole in the upper wall 410 of the battery can 400. The electrode terminal 700 may be electrically connected to the second current collector plate 600. The electrode terminal 700 may be electrically connected to the second current collector plate 600 and serve as the electrode terminal 700 of the secondary battery 10 of the present disclosure. For example, the electrode terminal 700 may be a cathode terminal.

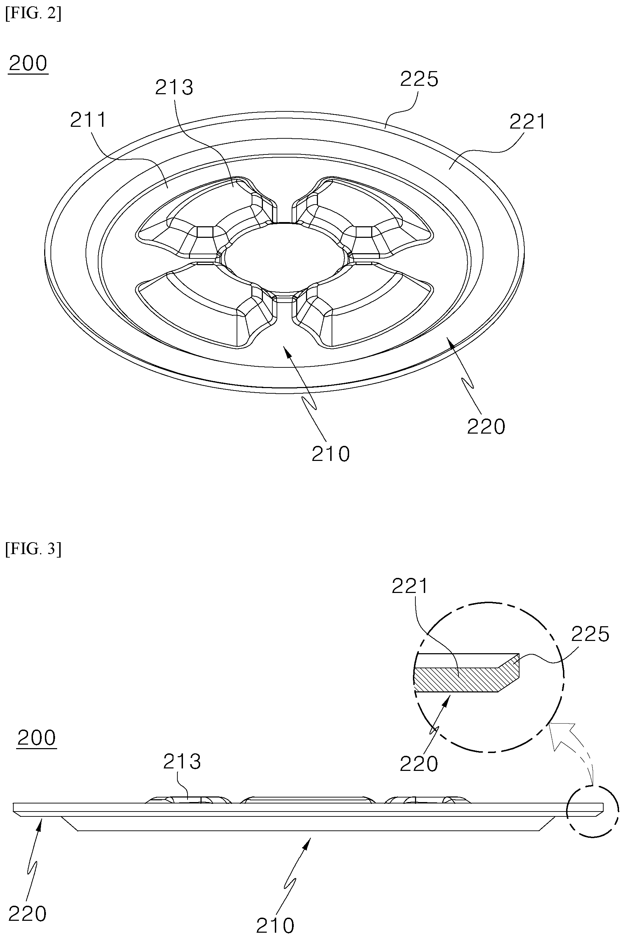

In an exemplary embodiment, the electrode terminal 700 may be provided in a rivet shape, as shown in FIG. 1. The electrode terminal 700 may be connected to the second current collector plate 600 by passing through the terminal hole formed in the upper wall 410 of the battery can 400. An upper end portion of the electrode terminal 700 may be exposed to the outside of the battery can 400 and fixed. A lower end portion of the electrode terminal 700 may be connected to the second current collector plate 600 through a hollow portion of the insulator 900. For example, the lower end portion of the electrode terminal 700 may be coupled to the second current collector plate 600 by a method such as pressing, soldering, or laser welding. In FIG. 2, the electrode terminal 700 is exemplarily shown as installed in a rivet shape, but it is not limited thereto, and it is obvious that any known type of electrode terminal 700 may be applied.

The terminal gasket 800 may be interposed between the electrode terminal 700 and the battery can 400. The terminal gasket 800 may prevent the electrode terminal 700 from directly contacting the battery can 400. For example, the terminal gasket 800 may be formed of an insulating material. The terminal gasket 800 may electrically insulate the electrode terminal 700 from the battery can 400.

For example, the terminal gasket 800 may include an elastic material. As an example, when the electrode terminal 700 is installed in the terminal hole through riveting, the terminal gasket 800 may be deformed by the force applied thereto. In this case, elastic restoring force may be generated in the terminal gasket 800, and the terminal gasket 800 may be interposed and fixed between the electrode terminal 700 and the battery can 400.

The terminal gasket 800 may maintain airtightness when the electrode terminal 700 is installed in the terminal hole of the upper wall 410 of the battery can 400. As shown in FIG. 1, in a structure where the electrode terminal 700 passes through the upper wall 410 of the battery can 400, the terminal gasket 800 may be disposed between the electrode terminal 700 and the battery can 400 to prevent the battery can 400 and the electrode terminal 700 from being electrically connected.

The second current collector plate 600 may be disposed adjacent to the upper end portion of the electrode assembly 100 inside the battery can 400. For example, the second current collector plate 600 may be disposed adjacent to the second electrode uncoated part 131 of the second electrode plate. The second current collector plate 600 may be electrically connected to the second electrode plate to provide a pathway for electron migration. In an exemplary embodiment, the second current collector plate 600 may be a cathode current collector.

The second current collector plate 600 may be electrically connected to the electrode terminal 700. The second current collector plate 600 may be electrically coupled to the lower end portion of the electrode terminal 700 and the second electrode plate of the electrode assembly 100. For example, the second current collector plate 600 may be electrically connected to the second electrode plate through the second electrode uncoated part 131.

The second current collector plate 600 may be coupled to the lower end portion of the electrode terminal 700 and the second electrode uncoated part 131, respectively, through pressing, soldering, laser welding, or the like. For example, the second current collector plate 600 may be in direct contact with the lower end portion of the electrode terminal 700 and the second electrode uncoated part 131. For example, the second current collector plate 600 may be electrically connected to the lower end portion of the electrode terminal 700 and the second electrode uncoated part 131, respectively, through a conductive member.

The second current collector plate 600 may be provided in a shape corresponding to an upper surface of the electrode assembly 100. For example, the second current collector plate 600 may have a circular metal structure. For example, the second current collector plate 600 may have a circular plate shape with a central hole.

The second current collector plate 600 may be arranged to be electrically insulated from the battery can 400. For example, in the secondary battery 10, the insulator 900 is interposed between the second current collector plate 600 and the battery can 400, so that the second current collector plate 600 and the battery can 400 may be electrically insulated.

The insulator 900 may be disposed between the second current collector plate 600 and the upper wall 410 of the battery can 400. The insulator 900 may prevent the second current collector plate 600 from contacting the upper wall 410 or the side wall 420 of the battery can 400.

The insulator 900 may prevent the second current collector plate 600 and the battery can 400 from being electrically connected. In an exemplary embodiment, the insulator 900 may have a hollow circular plate shape. For example, the electrode terminal 700 may pass through the insulator 900 via the hollow portion thereof to be electrically connected to the second current collector plate 600.

The first current collector plate 500 may be disposed adjacent to the lower end portion of the electrode assembly 100 inside the battery can 400. For example, the first current collector plate 500 may be disposed adjacent to the first electrode uncoated part 121 of the first electrode plate inside the battery can 400.

The first current collector plate 500 may be electrically connected to the first electrode plate to provide a pathway for electron migration. The first current collector plate 500 may be provided in a shape corresponding to a lower surface of the electrode assembly 100. For example, the first current collector plate 500 may have a circular metal structure. For example, the first current collector plate 500 may have a hollow circular plate shape.

In an exemplary embodiment, the first current collector plate 500 may be an anode current collector plate. The first current collector plate 500 may be electrically connected to the first electrode plate through the first electrode uncoated part 121. For example, the first current collector plate 500 may be in direct contact with the first electrode uncoated part 121.

For example, the first current collector plate 500 may be coupled to the first electrode uncoated part 121 through pressing, soldering, laser welding, or the like, but it is not limited thereto. For example, the first current collector plate 500 may be electrically connected to the first electrode uncoated part 121 through a conductive member.

In an exemplary embodiment, the first current collector plate 500 may be arranged to be electrically connected to the battery can 400. For example, the first current collector plate 500 may include an electrode connection part 510, which is coupled to the first electrode uncoated part 121, and a battery can connection part 530 formed around the electrode connection part 510 and connected to the battery can 400.

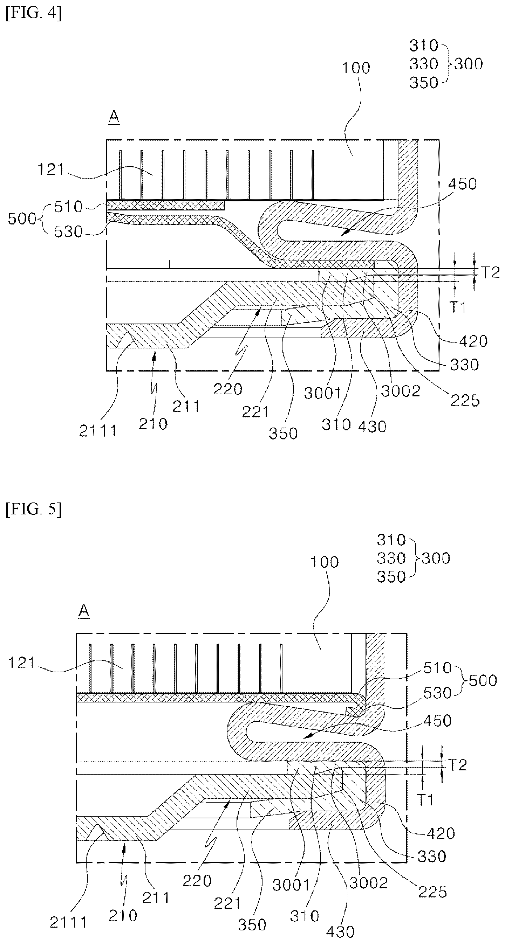

The battery can connection part 530 may be seated on a beading part 450 formed by recessing a partial section of the side wall 420 of the battery can 400 inward toward the center, as shown in FIG. 4.

The cap plate 200 may be coupled to the open end of the battery can 400 to seal the open end of the battery can 400. The cap plate 200 may be formed in a shape corresponding to the open end of the battery can 400. As an example, the cap plate 200 may have a circular plate shape. For example, the cap plate 200 may be made of a conductive metal material. Alternately, the cap plate 200 may be made of a non-conductive material, for example.

The sealing gasket 300 may be interposed between the cap plate 200 and the crimping part 430 of the battery can 400 to maintain airtightness. As an example, the sealing gasket 300 may be formed of an elastic material. The sealing gasket 300 may electrically insulate the cap plate 200 from the battery can 400.

For example, the sealing gasket 300 may be formed of an insulating material. As an example, the sealing gasket 300 may be formed of a resin material such as polyethylene (PE), polypropylene (PP), polyethylene terephthalate (PET), etc.

In the secondary battery 10 of the present disclosure, the electrolyte may be injected into the battery can 400 together with the electrode assembly 100 through the open end during the manufacturing process. In this case, the electrolyte serves to enable lithium ions to migrate between the second electrode plate and the first electrode plate forming the electrode assembly 100. For example, the electrolyte may be a non-aqueous organic electrolyte that is a mixture of a lithium salt and a high-purity organic solvent. For example, the electrolyte may be a polymer or solid electrolyte using a polymer electrolyte.

Meanwhile, in the manufacturing process of the secondary battery 10, after the electrode assembly 100 is received inside the battery can 400, the beading part 450 may be formed by recessing a partial section of the side wall 420 of the battery can inward toward the center. The battery can 400 may apply a physical fixing force to the electrode assembly 100 accommodated therein through the beading part 450. In another embodiment, a method for fixing the electrode assembly 100 through the arrangement of internal components of the electrode assembly 100 may be applied to the secondary battery, without forming the beading part 450 in the battery can 400.

In the manufacturing process of the secondary battery 10, the electrode connection part 510 of the first current collector plate 500 may be connected to the first electrode uncoated part 121 of the electrode assembly 100, and the battery can connection part 530 may be connected to the battery can 400. For example, the battery can connection part 530 may be connected to the beading part 450 of the battery can 400. As an example, the battery can connection part 530 may be connected to a lower portion of the beading part 450 (e.g., FIG. 4). Alternatively, the battery can connection part 530 may be connected to an upper portion of the beading part 450 (e.g., FIG. 5). The battery can 400 may be connected to the electrode assembly 100 through the first current collector plate 500, and may be polar to serve as one of the battery's terminals. In an exemplary embodiment, the battery can 400 may serve as an anode terminal.

After the electrode assembly 100 and the electrolyte are inserted into the battery can 400, the interior of the battery can 400 may be sealed by coupling the cap plate 200 to the open end. At this time, the sealing gasket 300 may be interposed between the cap plate 200 and the battery can 400.

For example, the cap plate 200 may be seated on the beading part 450 of the battery can 400. At least a portion of a peripheral part 220 of the cap plate 200 may be seated on the beading part 450. The sealing gasket 300 may be disposed between the cap plate 200 and the battery can 400. The cap plate 200 may be disposed adjacent to the beading part 450 of the battery can 400 to be seated on the beading part 450 through the sealing gasket 300.

During the manufacturing process, the crimping part 430 may be formed by inwardly bending the open end of the battery can 400 toward the center. The crimping part 430 may be described as being formed by inwardly bending a partial section of the lower end portion of the side wall 420 of the battery can 400 toward the center. In an exemplary embodiment, the crimping part 430 may be formed below the beading part 450.

In the secondary battery 10, the cap plate 200 may be seated on the beading part 450 of the battery can 400 together with the sealing gasket 300, and in this state, the crimping part 430 may be formed, thereby preventing the cap plate 200 from being detached.

Generally, a portion of the cap plate 200 of the secondary battery 10, which is surrounded by the crimping part 430 of the battery can 400, may be formed with a simple flat shape for ease of manufacturing the cap plate 200.

In addition, since it may be difficult to achieve sufficient sealing performance with only the structure in which the sealing gasket 300 is interposed between the cap plate 200 and the crimping part 430 of the battery can 400, a separate adhesive material such as silicone or tar may be applied to the sealing gasket 300.

The secondary battery 10 according to various embodiments of the present disclosure may achieve sufficient sealing performance without a separate adhesive material by a raised part 225 formed at a peripheral edge of the cap plate 200 along the circumference.

In various embodiments of the present disclosure, the cap plate 200 may be coupled to an open end formed in the battery can 400. For example, the cap plate 200 may be coupled to an open end formed at either the upper or lower end of the battery can 400. Alternatively, the cap plate 200 may be coupled to open ends formed at both the upper and lower ends of the battery can 400, respectively.

In the manufacturing process of the present disclosure, the secondary battery 10 may be pressed by the crimping part 430 while the cap plate 200 and the sealing gasket 300 are mounted on the beading part 450. At this time, the sealing gasket 300 may be compressed to different extents by the raised part 225 formed on the cap plate 200, thereby improving the sealing performance of the battery can 400.

Hereinafter, the cap plate 200 according to various embodiments of the present disclosure will be described in detail with reference to the accompanying drawings.

FIG. 2 is a perspective view illustrating the cap plate 200 according to an exemplary embodiment of the present disclosure, and FIG. 3 is a side view illustrating the cap plate 200 according to an exemplary embodiment of the present disclosure.

Referring to FIGS. 2 and 3, the cap plate 200 according to various embodiments of the present disclosure may include a central part 210 and the peripheral part 220 formed to extend radially from the central part 210.

The central part 210 may refer to a relatively radially inner section of the cap plate 200. For example, the central part 210 may have at least one recess or protrusion to enhance pressure resistance.

As an example, the central part 210 of the cap plate 200 may be provided with at least one downward protrusion 211 that protrudes downward in the axial direction. For example, the downward protrusion 211 may be formed with at least one vent notch 2111 to allow the cap plate 200 to open at a predetermined pressure. The vent notch 2111 may rupture when the pressure inside the battery can 400 increases, thereby preventing an explosion of the secondary battery 10.

In an exemplary embodiment, the cap plate 200 may be provided with an upward protrusion 213 that protrudes upward in the axial direction from a radially inner side of the downward protrusion 211. For example, the upward protrusion 213 may be electrically connected to the first current collector plate 500. As an example, the upward protrusion 213 may not be electrically connected to the second protrusion, and the cap plate 200 may be electrically non-polar.

The peripheral part 220 of the cap plate 200 may refer to a section that is formed to extend in a radially outward direction from the central part 210.

The peripheral part 220 may include a flat part 221 that is formed perpendicular to the axial direction of the battery can 400. In addition, the peripheral part 220 may include the raised part 225 that extends in the radially outward direction from the flat part 221 and protrudes toward at least one side in the axial direction of the battery can 400.

For example, the cap plate 200 may include the flat part 221 formed perpendicular to the axial direction, and the raised part 225 may be formed to extend in the radially outward direction from the flat part 221. The raised part 225 of the cap plate 200 may press the sealing gasket 300 during a process of sealing the battery can 400 through the crimping process, thereby compressing it and further enhancing the sealing performance of the battery can 400.

The raised part 225 may be formed at the peripheral edge of the cap plate 200. The raised part 225 may be formed at a radially outer end portion of the peripheral part 220 of the cap plate 200. In an exemplary embodiment, the raised part 225 may be formed to protrude from the radially outer end portion of the peripheral part 220 toward at least any one axial direction. For example, the raised part 225 may be formed by bending at least a partial section of an end portion of the flat part 221 toward at least one axial direction. For example, the raised part 225 may be formed to protrude toward any one axial direction while being spaced inward from the peripheral edge of the flat part 221.

The raised part 225 of the present disclosure may be formed using various processing methods apparent to those skilled in the art at the time of application.

That is, the secondary battery 10 according to various embodiments of the present disclosure may include the battery can 400 in which the electrode assembly 100 is accommodated through the open end formed at one side, the cap plate 200 coupled to the open end, and the sealing gasket 300 interposed between the battery can 400 and the cap plate 200. The cap plate 200 may include the flat part and the raised part 225 that protrudes from the flat part toward at least one axial direction of the battery can 400.

Hereinafter, the sealing structure of the battery can 400 using the raised part 225 of the cap plate 200 in various embodiments of the present disclosure will be described in more detail with reference to the accompanying drawings.

FIG. 4 and FIG. 5 are enlarged views of portion A in FIG. 1 according to an exemplary embodiment of the present disclosure.

First, referring to FIG. 4, at least a partial section of the peripheral part 220 of the cap plate 200 may be disposed in the beading part 450. For example, in the peripheral part 220, at least a partial section of the flat part 221 and the raised part 225 may be disposed adjacent to the beading part 450. At this time, the sealing gasket 300 may be interposed between the beading part 450 and the battery can 400.

In an exemplary embodiment, the sealing gasket 300 may be formed to surround at least a portion of the peripheral part 220 of the cap plate 200. For example, the sealing gasket 300 may include a first sealing part 310 that is in contact with at least a portion of an upper surface of the peripheral part 220 of the cap plate 200, a second sealing part 330 that is in contact with a side surface of the peripheral part 220, and a third sealing part 350 that is in contact with at least a portion of a lower surface of the peripheral part 220.

In addition, the sealing gasket 300 may be described as including a flat region 3001 that faces the flat part 221 of the cap plate 200 and a pressed region 3002 that faces the raised part 225 of the cap plate 200.

The sealing gasket 300 includes the flat region 3001 that faces the flat part 221 of the cap plate 200 and the pressed region 3002 that faces the raised part 225, and the thickness of the pressed region 3002 may be smaller than that of the flat region 3001.

In various embodiments, the flat region 3001 and the pressed region 3002 may be formed on at least one of the first sealing part 310 or the third sealing part 350.

Meanwhile, the crimping part 430 of the battery can 400 may be a portion formed by inwardly bending the lower end portion of the side wall 420 of the battery can 400 during the above-described crimping process. The crimping part 430 may apply a pressing force to the cap plate 200 and the sealing gasket 300 as the side wall 420 is being bent. For example, the crimping part 430 may apply an axial pressing force to the cap plate 200 and the sealing gasket 300.

For example, the crimping part 430 may be formed to extend inward in the radial direction from the side wall 420 of the battery can 400 continuing from the beading part 450. Here, the crimping part 430 may be described as forming a lower wall of the battery can 400.

Referring to FIG. 4 again, the raised part 225 may be formed to protrude upward in the axial direction from the cap plate 200. For example, the raised part 225 may be formed to protrude upward in the axial direction from the peripheral edge of the cap plate 200.

For example, the raised part 225 may be formed by bending the edge of the cap plate 200 from the flat part 221 upward in the axial direction. The raised part 225 may be formed to have a constant thickness. The raised part 225 may be formed by bending at a predetermined angle with respect to the flat part 221. The raised part 225 may be pressed by the crimping part 430 during the process of bending the side wall 420 of the battery can 400 in the crimping process, thereby compressing the sealing gasket 300.

In FIG. 4, for example, the first sealing part 310 of the sealing gasket 300 may include the flat region 3001 corresponding to the flat part 221 of the cap plate 200 and the pressed region 3002 corresponding to the raised part 225 of the cap plate 200.

The first sealing part 310 of the sealing gasket 300 may be pressed by the cap plate 200 during the crimping process. The first sealing part 310 may be deformed to different extents by being pressed by the flat part 221 and the raised part 225 of the cap plate 200.

That is, when a pressing force is applied toward the electrode assembly 100 by the crimping part 430 during the crimping process, the first sealing part 310 may experience a greater degree of deformation in the pressed region 3002 by the raised part 225 greater than the strain rate in the flat region 3001 by the pressing of the flat part 221 of the cap plate 200.

In the present disclosure, since the deformation in the pressed region 3002 is greater, the adhesion force between the sealing gasket 300 and the cap plate 200 in the pressed region 3002 may be increased.

According to various embodiments of the present disclosure, by improving the adhesion force for the sealing gasket 300 through the raised part 225 formed on the peripheral part 220 of the cap plate 200, the sealing performance of the secondary battery 10 may be enhanced without using a separate adhesive material.

Here, the thickness of the flat region 3001 of the sealing gasket 300 may be defined as thicknesses T1 and T1' of the flat region, and the thickness of the portion of the pressed region 3002 of the sealing gasket 300 that is most compressed by the raised part 225 of the cap plate 200 may be defined as thicknesses T2 and T2' of the pressed region.

Referring to FIG. 4, in an exemplary embodiment, the battery can connection part 530 of the first current collector plate 500 may be disposed between the beading part 450 and the sealing gasket 300. At this time, the thickness T1 of the flat region may be described as the thickness of the first sealing part 310 between the flat part 221 of the cap plate 200 and the can connection part of the first current collector plate 500, and the thickness T2 of the pressed region may be described as the thickness between the top of the raised part 225 of the cap plate 200 and the battery can connection part 530 of the first current collector plate 500.

Alternately, as shown in FIG. 5, the battery can connection part 530 of the first current collector plate 500 may be disposed between the electrode assembly 100 and the beading part 450 on the upper side of the beading part 450. At this time, the thickness of the first sealing part 310 between the flat part 221 of the cap plate 200 and the beading part 450 of the battery can 400 may be described as the thickness T1 of the flat region, and the thickness between the uppermost side of the raised part 225 of the cap plate 200 and the beading part 450 of the battery can 400 may be described as the thickness T2 of the pressed region.

As described above, in the sealing gasket 300, the thicknesses of the flat region 3001 and the pressed region 3002 of the first sealing part 310 may differ from each other after the crimping process due to the differential compression by the flat part 221 and the raised part 225 of the cap plate 200, as shown in FIG. 4.

In an exemplary embodiment, the thickness T2 of the pressed region of the first sealing part 310 may be smaller than the thickness T1 of the flat region due to the pressing applied by the raised part 225. For example, the thickness T2 of the pressed region may be in a range of 30% or more and less than 100% of the thickness T1 of the flat region. If the thickness T2 of the pressed region is compressed to less than 30% of the thickness T1 of the flat region, stress may be concentrated at that portion, which may cause a risk of rupture of the sealing gasket 300, and if the thickness T2 of the pressed region is equal to the thickness T1 of the flat region, it may be difficult to achieve a noticeable improvement in sealing performance.

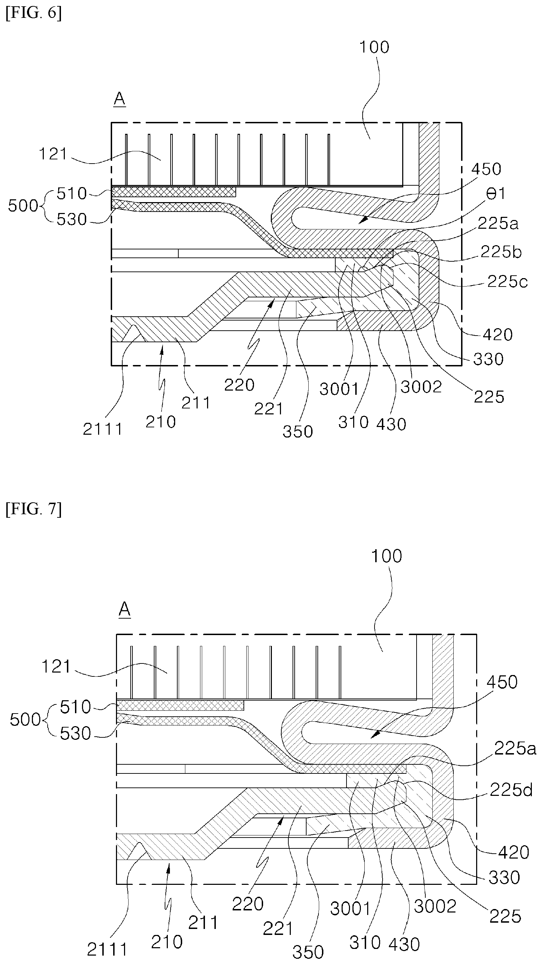

FIGS. 6 to 10 are enlarged views of part A in FIG. 1 according to an exemplary embodiment of the present disclosure.

The sealing structure of the battery can 400 in the exemplary embodiment of the present disclosure differs slightly in the specific shape of the raised part 225, while the remaining configuration is the same as that of the above-described embodiment. Therefore, a redundant description will be omitted.

Referring to FIG. 6, in the exemplary embodiment, the raised part 225 may include a first inclined surface 225a that is formed to incline at a first angle θ1 from the flat part 221. The first inclined surface 225a may be formed to incline upward at a first angle θ1 with respect to an upper surface of the flat part 221. The raised part 225 may include the first inclined surface 225a that is formed to incline upward, for example, at the first angle with respect to the upper surface of the flat part, for example, with respect to the flat part 221. For example, the first angle θ1 may be formed greater than 90°. For example, the first angle θ1 may be in a range greater than 90° and less than 180°. For example, the first angle θ1 may be in a range of 130° or more and less than 180°. If the first angle is formed less than 90°, there may be a risk of rupture of the sealing gasket 300 due to a difference in strain rate at the boundary between the flat region 3001 and the pressed region 3002 of the sealing gasket 300 caused by rapid compression. On the other hand, if the first angle is formed 180°, the pressing force applied by the raised part 225 to the pressed region 3002 of the sealing gasket 300 may not be sufficient.

Meanwhile, the section of a lower surface of the cap plate 200 corresponding to the first inclined surface 225a of the raised part 225 may be formed to incline upward to match the shape of the raised part 225. In this case, the raised part 225 may be formed using such as a press forming process, but it is not limited thereto.

For example, the section of the lower surface of the cap plate 200 corresponding to the raised part 225 may be formed to extend parallel to a lower surface of the flat part 221.

In an exemplary embodiment, the raised part 225 may include a flat surface 225b. For example, the flat surface 225b may extend in the radially outward direction from the first inclined surface 225a. The raised part 225 may include the flat surface 225b that extends perpendicular to the axial direction from the first inclined surface 225a.

The thickness T2 of the pressed region 3002 of the first sealing part 310 described above may correspond to the thickness of the first sealing part 310 after deformation caused by pressing with the flat surface 225b. In this case, since the pressing force causing the greatest deformation in the pressed region 3002 of the first sealing part 310 is generated through surface contact with the flat surface 225b, the stress in the pressed region 3002 may be evenly distributed, thereby reducing the defect rate of the sealing gasket 300 during the manufacturing process.

In an exemplary embodiment, the raised part 225 may further include a second inclined surface 225c. For example, the second inclined surface 225c may be formed to extend downward at an incline from the flat surface 225b. The flat surface 225b and the second inclined surface 225c may be sequentially formed to extend in the radially outward direction from the first inclined surface 225a.

Referring to FIG. 7, for example, the raised part 225 may include a curved portion 225d. For example, the curved portion 225d may be formed to have a predetermined curvature extending from the first inclined surface 225a. The curved portion 225d may be formed to curve downward in the radially outward direction from the first inclined surface 225a. Accordingly, the raised part 225 may include the curved portion 225d that gradually bends downward as it extends in the radially outward direction from the first inclined surface 225a.

In this case, the thickness T2 of the pressed region 3002 of the first sealing part 310 may refer to the compressed and deformed thickness of the pressed region 3002 measured at the end portion of the first inclined surface 225a. That is, after maximum deformation occurs at the end portion of the first inclined surface 225a, the strain rate of the first sealing part 310 may gradually decrease in the portion transitioning to the second sealing part 330 due to the presence of the curved portion. Accordingly, the sealing gasket 300 may reduce the risk of rupture caused by a sudden change in strain at the junction between the first sealing part 310 and the second sealing part 330.

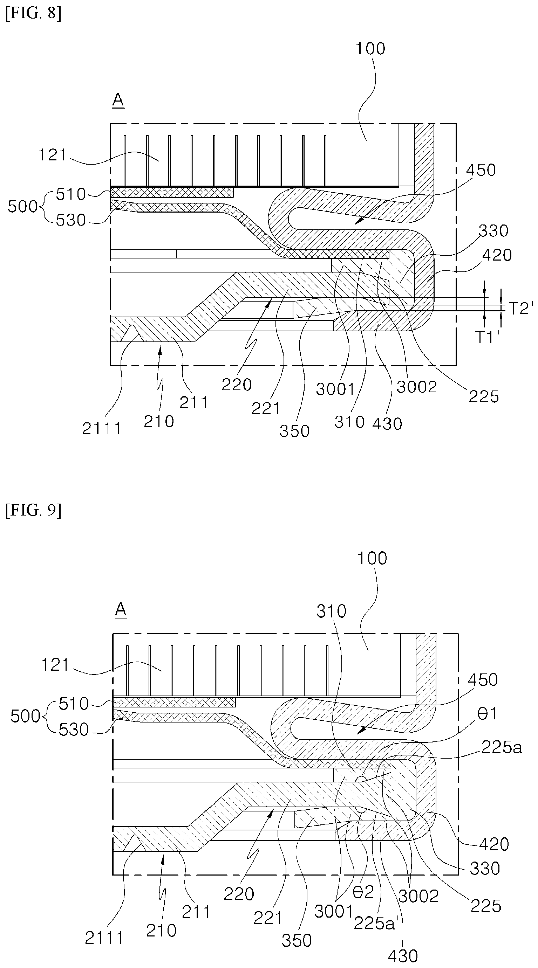

Referring to FIG. 8, the raised part 225 may be formed to protrude downward in the axial direction from the cap plate 200. The raised part 225 may be formed by bending the peripheral edge of the flat part 221 downward in the axial direction from the cap plate 200.

Here, the thickness T1' of the flat region 3001 may be described as the thickness of the third sealing part 350 between the flat part 221 of the cap plate 200 and the lower wall of the battery can 400, and the thickness T2' of the pressed region 3002 may be described as the thickness between the lowest end of the raised part 225 and the lower wall of the battery can 400.

Referring to FIG. 9, the raised part 225 may be formed to protrude both upward and downward in the axial direction from the cap plate 200, respectively. For example, the angle of the first inclined surface 225a in the raised part 225 protruding upward may be described as the first angle θ1, and the angle of a first inclined surface 225a' in the raised part 225 protruding downward may be described as the second angle θ2. In this case, the first inclined surface 225a' may be formed to incline downward at the second angle θ2 with respect to the lower surface of the flat part. The second angle θ2 may also be formed within the same angle range as the first angle θ1 described above. For example, the first angle θ1 and the second angle θ2 may be equal. Alternatively, the first angle θ1 may be formed greater than the second angle θ2. Conversely, the first angle θ1 may be formed smaller than the second angle θ2.

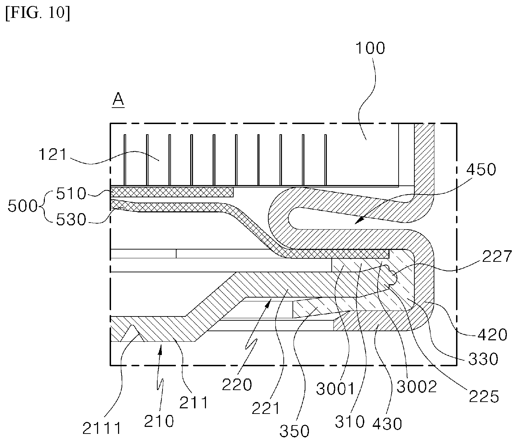

Meanwhile, referring to FIG. 10, in an exemplary embodiment of the present disclosure, the peripheral part 220 of the cap plate 200 may further include a side protrusion 227. The side protrusion 227 that protrudes in the radially outward direction may be disposed on a side surface of the cap plate 200.

For example, the side protrusion 227 may be formed to protrude in the radially outward direction from the side surface of the peripheral edge of the cap plate 200 that faces the side wall 420 of the battery can 400. For example, the side protrusion 227 may be formed integrally with the raised part 225. The side protrusion 227 may press the sealing gasket 300 against the side wall 420 of the battery can 400.

The side protrusion 227 may enhance the sealing performance of the battery can 400 by compressing the second sealing part 330 of the sealing gasket 300 against the side wall 420 during the crimping process. That is, the side protrusion 227 may provide a pressing force in a radially outward direction during the crimping process. During the crimping process of the secondary battery 10, bending or deformation may occur in the side wall 420 of the battery can 400 due to the force applied to form the crimping part 430. In an exemplary embodiment of the present disclosure, the side protrusion 227 may enhance the sealing performance of the secondary battery 10 and maintain airtightness by pressing the second sealing part 330 toward the side wall 420 of the battery can 400.

The exemplary embodiments of the raised part 225 according to the various embodiments of the present disclosure described above do not preclude application to other embodiments, and it should be understood that all components proposed in each embodiment, within the scope and objectives of the present disclosure, may be selectively combined in one or more configurations, and may be applied to or integrated with other embodiments at least partially.

As described above, the secondary battery 10 according to various embodiments of the present disclosure may improve the sealing performance of the battery can 400 by increasing the physical compression force applied to the sealing gasket 300 through the raised part 225 and/or the side protrusion formed at the peripheral edge of the cap plate 200.

The secondary battery 10 according to various embodiments of the present disclosure may achieve sufficient sealing performance through the physical structures formed on the peripheral part 220 of the cap plate 200, and thus may omit the need for a separate adhesive material for enhancing sealing performance.

The secondary battery 10 according to various embodiments of the present disclosure may simplify the manufacturing process and improve its efficiency by omitting the step of applying a separate adhesive material to the sealing gasket 300.

In the above, although the embodiments of the present disclosure have been described with all components combined in one or operating in combination, the present disclosure is not necessarily limited to such embodiments. Within the scope of the purpose of the present disclosure, all components may be selectively combined in one or more and operate accordingly. Unless otherwise defined, all terms including technical or scientific terms have the same meanings as commonly understood by those skilled in the art to which the present disclosure pertains. Commonly used terms, such as those defined in dictionaries, should be interpreted in accordance with the contextual meaning in the relevant technical field, and unless explicitly defined in the present disclosure, shall not be interpreted in an idealized or unduly formal sense.

## Claims

1. A secondary battery comprising:
a battery can configured to accommodate an electrode assembly through an open end;
a cap plate coupled to the open end; and
a sealing gasket interposed between the battery can and the cap plate,
wherein the cap plate comprises a flat part and a raised part protruding from the flat part toward at least one axial direction of the battery can.

2. The secondary battery according to claim 1, wherein the cap plate comprises the flat part formed perpendicular to the axial direction, and the raised part is formed to extend in a radially outward direction from the flat part.

3. The secondary battery according to claim 1 or 2, wherein the raised part protrudes upward in the axial direction from the cap plate.

4. The secondary battery according to any one of claims 1 to 3, wherein the raised part protrudes downward in the axial direction from the cap plate.

5. The secondary battery according to any one of claims 1 to 4, wherein the raised parts protrude upward and downward in the axial direction from the cap plate, respectively.

6. The secondary battery according to claim 2, wherein the raised part comprises a first inclined surface formed to incline at a first angle from the flat part.

7. The secondary battery according to claim 6, wherein the raised part comprises a flat surface that extends perpendicular to the axial direction from the first inclined surface.

8. The secondary battery according to claim 6 or 7, wherein the raised part comprises a curved portion which is formed to curve downward as it extends radially outward from the first inclined surface.

9. The secondary battery according to claim 2, wherein the sealing gasket comprises a flat region that faces the flat part of the cap plate and a pressed region that faces the raised part, wherein a thickness of the pressed region is smaller than that of the flat region.

10. The secondary battery according to claim 9, wherein the sealing gasket comprises a first sealing part in contact with at least a portion of an upper surface of a peripheral part of the cap plate, a second sealing part in contact with a side surface of the peripheral part, and a third sealing part in contact with at least a portion of a lower surface of the peripheral part,
wherein the flat region and the pressed region are formed in at least one of the first sealing part and the third sealing part.

11. The secondary battery according to any one of claims 1 to 5, wherein the raised part is disposed at the peripheral edge of the cap plate.

12. The secondary battery according to any one of claims 1 to 5, wherein a side protrusion protruding in the radially outward direction is disposed on a side surface of the cap plate.

13. The secondary battery according to claim 12, wherein the side protrusion presses the sealing gasket toward a side wall of the battery can.

14. The secondary battery according to claim 2, wherein the raised part is formed by bending at least a partial section of an end portion of the flat part toward at least one axial direction.

15. The secondary battery according to any one of claims 1 to 5, wherein the raised part is formed to protrude toward any one axial direction while being spaced inward from the peripheral edge of the flat part.
